(19)

Europäisches Patentamt

European Patent Office

Office européen des brevets

(11) **EP 4 343 887 A1**

(12) **EUROPEAN PATENT APPLICATION**
published in accordance with Art. 153(4) EPC

(43) Date of publication:
    **27.03.2024 Bulletin 2024/13**

(21) Application number: **22858755.6**

(22) Date of filing: **17.08.2022**

(51) International Patent Classification (IPC):
    $H01M\ 4/36^{(2006.01)}$     $H01M\ 4/525^{(2010.01)}$
    $H01M\ 4/505^{(2010.01)}$    $H01M\ 4/62^{(2006.01)}$
    $C01G\ 53/00^{(2006.01)}$    $H01M\ 10/052^{(2010.01)}$
    $H01M\ 4/02^{(2006.01)}$

(52) Cooperative Patent Classification (CPC):
    Y02E 60/10

(86) International application number:
    **PCT/KR2022/012292**

(87) International publication number:
    **WO 2023/022518 (23.02.2023 Gazette 2023/08)**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**
    Designated Validation States:
    **KH MA MD TN**

(30) Priority: **18.08.2021 KR 20210108997**

(71) Applicant: **LG Chem, Ltd.**
    **Seoul 07336 (KR)**

(72) Inventors:
    • **LEE, Jun Won**
      **Daejeon 34122 (KR)**

    • **KWAK, No Woo**
      **Daejeon 34122 (KR)**
    • **EOM, Jun Ho**
      **Daejeon 34122 (KR)**
    • **LIM, Chae Jin**
      **Daejeon 34122 (KR)**
    • **PARK, Na Ri**
      **Daejeon 34122 (KR)**
    • **KIM, Ji Hye**
      **Daejeon 34122 (KR)**
    • **JUNG, Byoung Hun**
      **Daejeon 34122 (KR)**

(74) Representative: **Hoffmann Eitle**
    **Patent- und Rechtsanwälte PartmbB**
    **Arabellastraße 30**
    **81925 München (DE)**

(54) **POSITIVE ELECTRODE ACTIVE MATERIAL, METHOD FOR PREPARING SAME, AND LITHIUM SECONDARY BATTERY COMPRISING SAME**

(57) The present invention relates to a positive electrode active material, wherein the positive electrode active material includes a lithium composite transition metal oxide and is a secondary particle in which primary particles are aggregated, wherein the primary particle includes a coating portion containing an $M^1$ metal, and the coating portion is locally present on surfaces of the primary particles or at inter-particle boundaries of the primary particles, a preparation method thereof, and a lithium secondary battery including the positive electrode active material.

FIG. 2

SINTERING

Ni, Co, Mn     Co

EP 4 343 887 A1

**Description**

**TECHNICAL FIELD**

[Cross-reference to Related Applications]

This application claims priority from Korean Patent Application No. 10-2021-0108997, filed on August 18, 2021, the disclosure of which is incorporated by reference herein.

[Technical Field]

The present invention relates to a positive electrode active material including a high nickel (high Ni) lithium composite transition metal oxide, wherein life characteristics of a lithium secondary battery may be improved and a resistance increase rate may be minimized by introducing a coating portion on surfaces of primary particles or at inter-particle boundaries of the primary particles using a segregation phenomenon, a preparation method thereof, and a lithium secondary battery including the positive electrode active material.

**BACKGROUND ART**

With the recent technological development of electric vehicles, demand for high-capacity secondary batteries is increasing, and, accordingly, research on a high nickel (high Ni) positive electrode active material having excellent capacity characteristics is being actively conducted.

The high nickel positive electrode active material formed in a secondary particle structure, in which primary particles are aggregated, has anisotropy of crystals between the primary particles at a boundary between the primary particles which is disposed between a plurality of primary particles. This causes a volume change as lithium is deintercalated and intercalated during charge and discharge of a lithium secondary battery to cause fine cracks between the particles, and, as a result, since the inside thereof is exposed to an electrolyte solution to cause a side reaction, it becomes a cause of degradation in life characteristics of the lithium secondary battery.

In order to solve this, various methods have been proposed to prevent or minimize the cracks during charge and discharge, but a problem due to the anisotropy of crystal orientation between the primary particles which essentially exists is not solved.

[Prior Art Documents]

[Patent Document]

(Patent Document 1) KR 10-2020-0036424 A

**DISCLOSURE OF THE INVENTION**

**TECHNICAL PROBLEM**

An aspect of the present invention provides a positive electrode active material including a high nickel (high Ni) lithium composite transition metal oxide, wherein, in order to prevent cracks due to anisotropy in crystal orientation between primary particles, life characteristics of a lithium secondary battery may be improved and a resistance increase rate may be minimized by introducing a coating portion on surfaces of the primary particles or at inter-particle boundaries of the primary particles using a segregation phenomenon.

Another aspect of the present invention provides a method of preparing the positive electrode active material which may introduce the coating portion on the surfaces of the primary particles or at the inter-particle boundaries of the primary particles using the segregation phenomenon.

Another aspect of the present invention provides a lithium secondary battery in which the life characteristics are improved and the resistance increase rate is minimized by including the positive electrode active material.

**TECHNICAL SOLUTION**

In order to solve the above-described tasks, the present invention provides a positive electrode active material, a method of preparing a positive electrode active material, a positive electrode, and a lithium secondary battery.

(1) The present invention provides a positive electrode active material including a lithium composite transition metal oxide and being a secondary particle in which primary particles are aggregated, wherein the primary particle includes a coating portion containing an $M^1$ metal of Formula 1, wherein the coating portion is locally present on surfaces of the primary particles or at inter-particle boundaries of the primary particles, and the lithium composite transition metal oxide has an average composition represented by Formula 1 by including the coating portion.

[Formula 1] $\qquad Li_x Ni_a Co_b Mn_c M^1_d M^2_e O_2$

In Formula 1, $M^1$ is at least one selected from the group consisting of lanthanides, $M^2$ is at least one selected from the group consisting of Al, Zr, B, W, Mo, Cr, Nb, Mg, Hf, Ta, La, Ti, Sr, Ba, F, P, S, and Y, and $0.9 \leq x \leq 1.1$, $0.8 \leq a < 1.0$, $0 < b < 0.2$, $0 < c < 0.2$, $0 < d \leq 0.1$, $0 \leq e \leq 0.1$, and $a+b+c+d+e=1$.

(2) The present invention provides the positive electrode active material of (1) above, wherein the $M^1$ is Ce.

(3) The present invention provides the positive electrode active material of (1) or (2) above, wherein the coating portion is not a coating portion which is formed on a surface of the secondary particle.

(4) The present invention provides the positive electrode active material of any one of (1) to (3) above, wherein the primary particle has a crystal size of 90 nm to 140 nm.

(5) The present invention provides the positive electrode active material of any one of (1) to (4) above, wherein the secondary particle has an average particle diameter ($D_{50}$) of 8 um to 20 $\mu$m.

(6) The present invention provides the positive electrode active material of any one of (1) to (5) above, wherein the positive electrode active material further includes a coating layer including boron which is formed on a part or all of the surface of the primary particle; and a part or all of the surface of the secondary particle.

(7) The present invention provides a method of preparing a positive electrode active material which includes steps of: mixing a nickel raw material, a cobalt raw material, a manganese raw material, and an $M^1$ metal raw material of Formula 3 in an aqueous solution phase, and performing a co-precipitation reaction to prepare a positive electrode active material precursor having an average composition represented by Formula 3 (S10); mixing the positive electrode active material precursor and a lithium raw material (S20); and sintering the mixture mixed in the step (S20) in an oxygen atmosphere (S30).

[Formula 3] $\qquad [Ni_a Co_b Mn_c M^1 d] (OH)_2$

In Formula 3, $M^1$ is at least one selected from the group consisting of lanthanides, and $0.8 \leq a < 1.0$, $0 < b < 0.2$, $0 < c < 0.2$, $0 < d \leq 0.1$, and $a+b+c+d=1$.

(8) The present invention provides the method of preparing a positive electrode active material of (7) above, wherein the $M^1$ metal raw material is a nitrate of $M^1$ metal.

(9) The present invention provides the method of preparing a positive electrode active material of (7) or (8) above, wherein, during the co-precipitation reaction of the step (S10), a pH is maintained at 11.3 to 11.5.

(10) The present invention provides the method of preparing a positive electrode active material of any one of (7) to (9) above, wherein the co-precipitation reaction of the step (S10) is performed for 10 hours to 30 hours.

(11) The present invention provides the method of preparing a positive electrode active material of any one of (7) to (10) above, wherein the positive electrode active material precursor prepared in the step (S10) has an average particle diameter of 1 um to 20 $\mu$m.

(12) The present invention provides the method of preparing a positive electrode active material of any one of (7) to (11) above, wherein the step (S20) is performed by further including one or more doping raw materials selected from the group consisting of Al, Zr, B, W, Mo, Cr, Nb, Mg, Hf, Ta, La, Ti, Sr, Ba, F, P, S, and Y.

(13) The present invention provides the method of preparing a positive electrode active material of any one of (7) to (12) above, wherein the sintering of the step (S30) is performed at a temperature of 700°C to 800°C for 4 hours to 6 hours.

(14) The present invention provides the method of preparing a positive electrode active material of any one of (7) to (13), wherein the method further includes a step (S40) of washing and drying the sintered material sintered in the step (S30).

(15) The present invention provides the method of preparing a positive electrode active material of (14) above, wherein the method further includes a step (S50) of performing a heat treatment, after mixing a boron raw material with the sintered material washed and dried in the step (S40).

(16) The present invention provides a positive electrode including the positive electrode active material of any one of (1) to (6).

(17) The present invention provides a lithium secondary battery including the positive electrode of (17), a negative electrode, a separator disposed between the positive electrode and the negative electrode, and an electrolyte.

**ADVANTAGEOUS EFFECTS**

A positive electrode active material of the present invention is a positive electrode active material including a high nickel (high Ni) lithium composite transition metal oxide, wherein, since a coating portion is introduced on surfaces of primary particles or at inter-particle boundaries of the primary particles by a segregation phenomenon, life characteristics of a lithium secondary battery may be improved and a resistance increase rate may be minimized.

Also, according to a method of preparing a positive electrode active material of the present invention, the coating portion may be effectively introduced on the surfaces of the primary particles or at the inter-particle boundaries of the primary particles by inducing the segregation phenomenon without performing a separate coating step.

**BRIEF DESCRIPTION OF THE DRAWINGS**

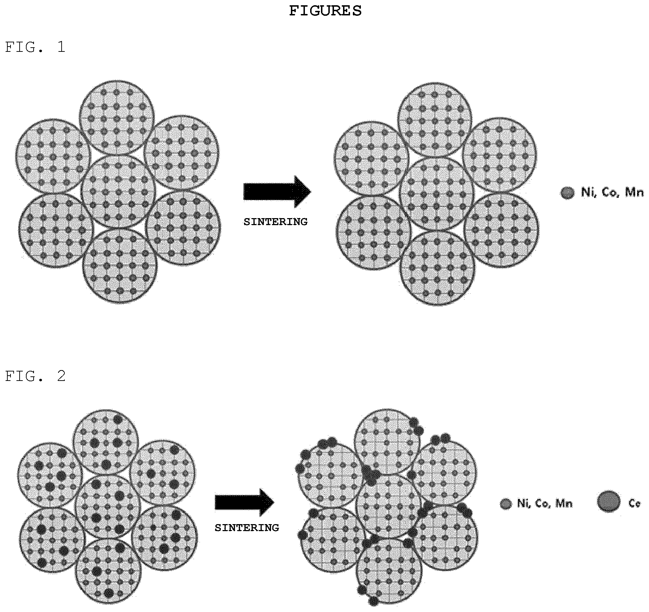

FIG. 1 is a schematic view illustrating that, when a positive electrode active material is prepared by sintering according to the related art, a layered crystal structure of transition metals in primary particles is maintained.

FIG. 2 is a schematic view illustrating that, when a positive electrode active material is prepared by sintering according to the present invention, cerium in positive electrode active material precursor particles is segregated on surfaces of primary particles or at inter-particle boundaries of the primary particles by a segregation phenomenon to form a coating portion.

FIG. 3 is a cross-sectional scanning electron microscope (SEM) image of a positive electrode active material of Example 1.

FIG. 4 is energy dispersive X-ray spectroscopy (EDS) mapping results of the cross-sectional SEM image of the positive electrode active material of Example 1.

FIG. 5 is EDS line scan results of the cross-sectional SEM image of the positive electrode active material of Example 1.

FIG. 6 is a cross-sectional scanning electron microscope (SEM) image of a positive electrode active material of Comparative Example 1.

FIG. 7 is EDS mapping results of the cross-sectional SEM image of the positive electrode active material of Comparative Example 1.

FIG. 8 is EDS line scan results of the cross-sectional SEM image of the positive electrode active material of Comparative Example 1.

FIG. 9 is an SEM image of the positive electrode active material of Example 1 and an EDS mapping result for cerium (Ce).

FIG. 10 is an SEM image of a positive electrode active material of Comparative Example 2 and an EDS mapping result for Ce.

FIG. 11 is an SEM image of a positive electrode active material of Comparative Example 3 and an EDS mapping result for Ce.

FIG. 12 is EDS line scan results of a cross-sectional SEM image of the positive electrode active material of Comparative Example 3.

**MODE FOR CARRYING OUT THE INVENTION**

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present invention, the expression "primary particle" denotes a smallest particle unit which is distinguished as one body when a cross section of a positive electrode active material is observed through a scanning electron microscope (SEM), wherein it may be composed of a plurality of crystallites.

In the present invention, the expression "secondary particle" denotes a secondary structure formed by aggregation of a plurality of primary particles. An average particle diameter of the secondary particle may be measured using a particle size analyzer.

The expression "average particle diameter $(D_{50})$" in the present invention denotes a particle diameter at 50% of cumulative distribution of volume according to the particle diameter. After dispersing measurement target powder in a dispersion medium, the dispersion medium is introduced into a commercial laser diffraction particle size measurement instrument (e.g., Microtrac S3500), a particle size distribution is calculated by measuring a difference in diffraction patterns due to a particle size when particles pass through a laser beam, and the $D_{50}$ may be measured by calculating a particle diameter at 50% of the cumulative distribution of volume according to the particle diameter using the measurement instrument.

**Positive Electrode Active Material**

The present invention provides a positive electrode active material.

According to an embodiment of the present invention, the positive electrode active material includes a lithium composite transition metal oxide and is a secondary particle in which primary particles are aggregated, wherein the primary particle includes a coating portion containing an $M^1$ metal of the following Formula 1, wherein the coating portion is locally present on surfaces of the primary particles or at inter-particle boundaries of the primary particles, and the lithium composite transition metal oxide may have an average composition represented by the following Formula 1 by including the coating portion.

[Formula 1]        $Li_xNi_aCo_bMn_cM^1_dM^2_eO_2$

In Formula 1, $M^1$ is at least one selected from the group consisting of lanthanides, $M^2$ is at least one selected from the group consisting of Al, Zr, B, W, Mo, Cr, Nb, Mg, Hf, Ta, La, Ti, Sr, Ba, F, P, S, and Y, and $0.9 \le x \le 1.1$, $0.8 \le a < 1.0$, $0 < b < 0.2$, $0 < c < 0.2$, $0 < d \le 0.1$, $0 \le e \le 0.1$, and $a+b+c+d+e=1$.

According to an embodiment of the present invention, the lithium composite transition metal oxide having an average composition represented by Formula 1 is a high nickel (high Ni) lithium composite transition metal oxide containing nickel among transition metals in a molar ratio of 80 mol% or more, as represented by Formula 1.

According to an embodiment of the present invention, in Formula 1, $M^1$ may be Ce, and, in this case, capacity, lifetime, and output are all excellent.

According to an embodiment of the present invention, in Formula 1, b, c, and d may satisfy $0 < b < 0.1$, $0 < c < 0.1$, and $0 < d < 0.1$, respectively, and, as a specific example, $0 < b \le 0.08$, $0 < c \le 0.08$, and $0 < d \le 0.01$.

According to an embodiment of the present invention, the lithium composite transition metal oxide represented by Formula 1 may be a lithium composite transition metal oxide represented by Formula 2 below.

[Formula 2]        $Li_xNi_aCo_bMn_cCe_dM^2_eO_2$

In Formula 2, $M^2$ may be at least one selected from the group consisting of Zr, B, W, Mo, Cr, Nb, Mg, Hf, Ta, La, Ti, Sr, Ba, F, P, S, and Y, and $0.9 \le x \le 1.1$, $0.8 \le a < 1.0$, $0 < b < 0.2$, $0 < c < 0.2$, $0 < d \le 0.1$, $0 \le e \le 0.1$, and $a+b+c+d+e=1$.

According to an embodiment of the present invention, in Formula 2, b, c, and d may satisfy $0 < b < 0.1$, $0 < c < 0.1$, and $0 < d < 0.1$, respectively, and, as a specific example, $0 < b \le 0.08$, $0 < c \le 0.08$, and $0 < d \le 0.01$.

According to an embodiment of the present invention, the coating portion locally present on the surfaces of the primary particles or at the inter-particle boundaries of the primary particles includes the $M^1$ metal, wherein the $M^1$ metal of the coating portion may be formed by concentrating the $M^1$ metal present in a positive electrode active material precursor, which is formed by co-precipitation with the transition metals, on the surfaces of the primary particles or at the inter-particle boundaries of the primary particles by a segregation phenomenon during sintering. That is, the coating portion is distinguished from a coating portion or coating layer which is formed by dry coating or wet coating of the lithium composite transition metal oxide. As described above, in a case in which the coating portion is present on the surfaces of the primary particles or at the inter-particle boundaries of the primary particles, since the coating portion is present between the primary particles exhibiting anisotropy of crystal orientation, occurrence of fine cracks between the particles due to a volume change as lithium is deintercalated and intercalated during charge and discharge may be minimized and, even if the cracks occur, life characteristics of a lithium secondary battery may be improved by protecting the cracks with the coating portion. As a specific example, the coating portion may be locally present on the surfaces of the primary particles and at the inter-particle boundaries of the primary particles. Specifically, the local presence of the coating portion means that the segregated $M^1$ metal does not deviate from the surfaces of the primary particles and the inter-particle boundaries of the primary particles, but is uniformly distributed on the surfaces of the primary particles and at the inter-particle boundaries of the primary particles. That is, the coating portion is not a coating portion, which is formed on the surface of the secondary particle by protruding from the surfaces of the primary particles and the inter-particle boundaries of the primary particles to a surface portion of the secondary particle due to over-segregation of the $M^1$ metal, or a coating portion or coating layer which is formed on the surface of the secondary particle by dry coating or wet coating. The coating portion or coating layer formed on the surface of the secondary particle has a shape in which one coating portion or coating layer covers the surfaces of a plurality of primary particles, and the shape is different from that of the coating portion of the present invention which is formed on the surfaces of the primary particles and at the inter-particle boundaries of the primary particles.

According to an embodiment of the present invention, the lithium composite transition metal oxide has an average composition represented by Formula 1 by including the coating portion, wherein, since the $M^1$ metal is concentrated on the surfaces of the primary particles or at the inter-particle boundaries of the primary particles by the segregation phenomenon, the lithium composite transition metal oxide excluding the coating portion may not include the $M^1$ metal therein. That is, the lithium composite transition metal oxide having an average composition represented by Formula 1 is distinguished from a lithium composite transition metal oxide simply including the $M^1$ metal, as a doping element, in particles or crystals of the lithium composite transition metal oxide, not in the coating portion.

According to an embodiment of the present invention, the primary particle may be a polycrystalline primary particle. Thus, a crystal size of the primary particle may mean a crystal size of crystallites of the polycrystalline primary particle. As a specific example, the crystal size of the primary particles may be in a range of 90 nm to 140 nm, 100 nm to 130 nm, 110 nm to 130 nm, or 120 nm to 130 nm. As described above, in a case in which the crystal size is controlled in the range of 90 nm to 140 nm, since occurrence of adverse effects due to the over-segregation may be prevented while inducing the segregation phenomenon of the $M^1$ metal, there is an effect of reducing a resistance increase rate and improving lifetime of the lithium secondary battery. The crystal size of the primary particles may be measured by an X-ray diffraction analysis method using a D4 ENDEAVOR by Bruker AXS GmbH with a copper (Cu) target at an accelerating voltage of 40 kV, an accelerating current of 40 mA, and a rate of 3° per minute within a range of 10° to 90°, and may be calculated using a TOPAS program of Bruker AXS GmbH.

According to an embodiment of the present invention, the secondary particle may have an average particle diameter ($D_{50}$) of 8 um to 20 um, 10 um to 20 um, 10 um to 18 um, 10 um to 15 um, 10 um to 13 um, 10 um to 12 um, 10 um to 11.5 um, 10.5 um to 11.5 um, or 11 pm to 11.5 um, and, within this range, capacity characteristics are excellent, and, particularly, there is an effect capable of improving capacity characteristics of a bimodal positive electrode material including the secondary particle as a large particle as well as a small particle positive electrode active material.

According to an embodiment of the present invention, the positive electrode active material may include a coating layer including boron which is formed on a part or all of the surface of the primary particle; and a part or all of the surface of the secondary particle. In this case, there is an effect of improving the lifetime of the lithium secondary battery. Herein, the coating layer including boron means a separate coating layer which is distinct from the coating portion including the $M^1$ metal.

According to an embodiment of the present invention, the coating layer including boron may include boron in the form of an amorphous boron compound such as lithium boron oxide and boron oxide. As a specific example, the coating layer may include $LiBO_2$, $Li_2B_4O_7$, $LiB_3O_5$, or $B_2O_3$. The amorphous boron compound may be continuously coated in the form of a film, an island, or a mixture thereof, unlike a crystalline compound that may only be discontinuously coated in the form of a particle.

According to an embodiment of the present invention, the coating layer may be included in an amount of 500 ppm to 1,500 ppm, 500 ppm to 1,200 ppm, or 500 ppm to 1,000 ppm based on the lithium composite transition metal oxide, and, within this range, there is an effect of further improving the lifetime while preventing a decrease in capacity of the lithium secondary battery.

## Method of Preparing Positive Electrode Active Material

The present invention provides a method of preparing a positive electrode active material which is for preparing the above positive electrode active material.

According to the present invention, the method of preparing a positive electrode active material may include the steps of: mixing a nickel raw material, a cobalt raw material, a manganese raw material, and an $M^1$ metal raw material of the following Formula 3 in an aqueous solution phase, and performing a co-precipitation reaction to prepare a positive electrode active material precursor having an average composition represented by the following Formula 3 (S10); mixing the positive electrode active material precursor and a lithium raw material (S20); and sintering the mixture mixed in step (S20) in an oxygen atmosphere (S30).

$$[\text{Formula 3}] \qquad [Ni_aCo_bMn_cM^1d](OH)_2$$

In Formula 3, $M^1$ is at least one selected from the group consisting of lanthanides, and $0.8 \leq a < 1.0$, $0 < b < 0.2$, $0 < c < 0.2$, $0 < d \leq 0.1$, and $a+b+c+d=1$.

According to an embodiment of the present invention, step (S10) is a step for preparing a positive electrode active material precursor by performing a co-precipitation reaction of an $M^1$ metal for forming a coating portion on surfaces of primary particles or at inter-particle boundaries of the primary particles by inducing a segregation phenomenon with a transition metal.

According to an embodiment of the present invention, step (S10) may be started while adding distilled water, an ammonium ion-containing solution, and a basic aqueous solution to a reactor and purging the reactor with nitrogen gas. A batch-type reactor may be used as the reactor, and, in this case, since reaction conditions, such as concentrations, temperature, and residence time of reactants in the reactor, are maintained the same, a relatively uniform product without deviation may be prepared. In this case, an initial reaction solution including distilled water, an ammonium ion-containing solution, and a basic aqueous solution may be added to the reactor to a predetermined volume of the reactor to adjust a pH in the reactor.

According to an embodiment of the present invention, the ammonium ion-containing solution may include at least one selected from the group consisting of $NH_4OH$, $(NH_4)_2SO_4$, $NH_4NO_3$, $NH_4Cl$, $CH_3COONH_4$, and $NH_4CO_3$. Water or a mixture of water and an organic solvent (specifically, alcohol etc.), which may be uniformly mixed with the water, may be used as a solvent.

According to an embodiment of the present invention, the basic aqueous solution may include at least one selected from the group consisting of NaOH, KOH, and $Ca(OH)_2$, and water or a mixture of water and an organic solvent (specifically, alcohol etc.), which may be uniformly mixed with the water, may be used as a solvent.

According to an embodiment of the present invention, in step (S10), a nickel raw material, a cobalt raw material, a manganese raw material, and an $M^1$ metal raw material of Formula 3 are mixed in an aqueous solution phase in the reactor, and a co-precipitation reaction may be performed by adding the mixed aqueous solution, the ammonium ion-containing solution, and the basic aqueous solution.

According to an embodiment of the present invention, the nickel raw material, the cobalt raw material, and the manganese raw material may each include acetate, nitrate, sulfate, halide, sulfide, hydroxide, oxide or oxyhydroxide of each transition metal.

According to an embodiment of the present invention, the nickel raw material may be $Ni(OH)_2$, NiO, NiOOH, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, a fatty acid nickel salt, or a nickel halide, and any one thereof or a mixture of two or more thereof may be used.

According to an embodiment of the present invention, the cobalt raw material may be $Co(OH)_2$, CoOOH, $Co(OCOCH_3)_2 \cdot 4H_2O$, $Co(NO_3)_2 \cdot 6H_2O$, or $Co(SO_4)_2 \cdot 7H_2O$, and any one thereof or a mixture of two or more thereof may be used.

According to an embodiment of the present invention, the manganese raw material may be a manganese oxide such as $Mn_2O_3$, $MnO_2$, and $Mn_3O_4$; a manganese salt such as $MnCO_3$, $Mn(NO_3)_2$, $MnSO_4$, manganese acetate, manganese dicarboxylate, manganese citrate, and a fatty acid manganese salt; a manganese oxyhydroxide, or manganese chloride, and any one thereof or a mixture of two or more thereof may be used.

According to an embodiment of the present invention, the $M^1$ metal raw material may be a nitrate of the $M^1$ metal, and, as a specific example, the $M^1$ metal raw material may be $Ce(NO_3)_3$.

According to an embodiment of the present invention, during the co-precipitation reaction of step (S10), the pH may be maintained at 11.3 to 11.5. As a specific example, the ammonium ion-containing solution and the aqueous alkaline solution are first added at the beginning of the reaction to adjust the pH to be in a range of 11.3 to 11.5, and thereafter, particle nuclei may be formed while adding an aqueous solution, in which the nickel raw material, the cobalt raw material, the manganese raw material, and the $M^1$ metal raw material of Formula 3 are mixed in an aqueous solution phase, into the reactor. In this case, since the pH value in the reactor changes as the particle nuclei are formed by the addition of the aqueous solution, the ammonium ion-containing solution and the aqueous alkaline solution are continuously added together with the addition of the aqueous solution to control the pH to be maintained at 11.3 to 11.5.

According to an embodiment of the present invention, the co-precipitation reaction of step (S10) may be performed for 10 hours to 30 hours, 11 hours to 25 hours, or 12 hours to 20 hours, and, within this range, a particle growth reaction may be sufficiently induced.

According to an embodiment of the present invention, the co-precipitation reaction of step (S10) may be performed while stirring. As a specific example, stirring may be performed at a stirring speed of 500 rpm to 1,000 rpm, 600 rpm to 800 rpm, or 650 rpm to 750 rpm while particle growth proceeds through the co-precipitation reaction from the beginning of the reaction, and, after the particle growth reaction proceeds, the stirring speed is gradually decreased to 100 rpm to 500 rpm, 200 rpm to 500 rpm, or 300 rpm to 400 rpm, and the reaction may then be terminated.

According to an embodiment of the present invention, the positive electrode active material precursor prepared in step (S10) may have an average particle diameter of 1 um to 20 um, 5 um to 15 um, or 10 um to 13 $\mu$m.

According to an embodiment of the present invention, the positive electrode active material precursor prepared in step (S10) may be a hydroxide of nickel-cobalt-manganese-$M^1$ metal for forming a high nickel lithium composite transition metal oxide containing nickel among transition metals in a molar ratio of 80 mol% or more, as represented by Formula 3, and, in a case in which the nickel content satisfies the above range, the capacity of the lithium secondary battery is excellent.

According to an embodiment of the present invention, in Formula 3, $M^1$ may be Ce.

According to an embodiment of the present invention, in Formula 3, b, c, and d may satisfy 0<b<0.1, 0<c<0.1, and 0<d<0.1, respectively, and, as a specific example, $0<b\leq0.08$, $0<c\leq0.08$, and $0<d\leq0.01$.

According to an embodiment of the present invention, the positive electrode active material precursor represented by Formula 3 may be a positive electrode active material precursor represented by Formula 4 below.

[Formula 4]    $[Ni_aCo_bMn_cCe_d](OH)_2$

In Formula 4, $0.8 \leq a < 1.0$, $0 < b < 0.2$, $0 < c < 0.2$, $0 < d \leq 0.1$, $0 \leq e \leq 0.1$, and $a+b+c+d+e=1$.

According to an embodiment of the present invention, in Formula 4, b, c, and d may satisfy $0 < b < 0.1$, $0 < c < 0.1$, and $0 < d < 0.1$, respectively, and, as a specific example, $0 < b \leq 0.08$, $0 < c \leq 0.08$, and $0 < d \leq 0.01$.

According to an embodiment of the present invention, step (S20) is a step of mixing the positive electrode active material precursor and a lithium raw material to form a lithium composite transition metal oxide.

According to an embodiment of the present invention, as the lithium raw material, lithium-containing sulfates, nitrates, acetic acid salts, carbonates, oxalates, citrates, halides, hydroxides, or oxyhydroxides may be used, and, for example, $Li_2CO_3$, $LiNO_3$, $LiNO_2$, $LiOH$, $LiOH \cdot H_2O$, $LiH$, $LiF$, $LiCl$, $LiBr$, $LiI$, $CH_3COOLi$, $Li_2O$, $Li_2SO_4$, $CH_3COOLi$, $Li_3C_6H_5O_7$, or a mixture thereof may be used.

According to an embodiment of the present invention, the lithium raw material and the positive electrode active material precursor may be mixed so that a molar ratio of Li:total transition metals in the precursor is in a range of 1:1 to 1.2:1, or 1:1 to 1.1:1. When the mixing ratio of the lithium raw material to the transition metals in the positive electrode active material precursor satisfies the above range, since a crystal structure of a positive electrode active material is well developed, the positive electrode active material having excellent capacity characteristics and structural stability may be prepared.

According to an embodiment of the present invention, step (S20) may be performed by further including one or more doping raw materials selected from the group consisting of Al, Zr, B, W, Mo, Cr, Nb, Mg, Hf, Ta, La, Ti, Sr, Ba, F, P, S, and Y. The doping raw material may be acetic acid salts, nitrates, sulfates, halides, sulfides, hydroxides, oxides, or oxyhydroxides which contain the above element, and, as a specific example, the doping raw material may be $Al_2O_3$, $Al(OH)_3$, $Al(NO_3)_3 \cdot 9H_2O$, or $Al_2(SO_4)_3$.

According to an embodiment of the present invention, step (S30) is a step for sintering the mixture mixed in step (S20), wherein it may be a step of inducing the segregation phenomenon of the M[1] metal in the positive electrode active material precursor represented by Formula 3 while the lithium raw material is melted to start a reaction with the positive electrode active material precursor and the crystals of the positive electrode active material are grown. As a specific example, the sintering of step (S30) may be performed at a temperature of 700°C to 800°C, 750°C to 800°C, or 770°C to 790°C for 4 hours to 6 hours.

According to an embodiment of the present invention, a driving principle of the segregation phenomenon may be expressed by Equation 1 below.

[Equation 1]

$$ln\left(\frac{X_{Ce}^{bulk}}{X_{NCM}^{bulk}}\right) = ln\left(\frac{X_{Ce}^{surface}}{X_{NCM}^{surface}}\right) - \frac{\Delta H_S}{RT}$$

In Equation 1, $X_{NCM}^{bulk}$ is a concentration of a host element, such as nickel, cobalt, and manganese, in a crystallite, $X_{Ce}^{bulk}$ is a concentration of a segregation-inducing element, such as the M[1] metal, in the crystallite, $X_{NCM}^{surface}$ is a concentration of the host element, such as nickel, cobalt, and manganese, on the surface of the primary particle and at the inter-particle boundary of the primary particles, $X_{Ce}^{surface}$ is a concentration of the segregation-inducing element, such as the M$^1$ metal, on the surface of the primary particle and at the inter-particle boundary of the primary particles, and $\Delta H_S$ is a segregation enthalpy. Herein, the segregation enthalpy may be calculated from $(r_{NCM}\ r_{Ce})^2$, and $X_{Ce}^{surface}$ increases as the segregation enthalpy increases. $T_{NCM}$ is an ionic radius size of the host element such as nickel, cobalt, and manganese, and $T_{Ce}$ is an ionic radius size of the segregation-inducing element such as the M$^1$ metal.

The method of preparing a positive electrode active material according to the present invention may be performed by adjusting steps (S10) to (S30) so that the segregation phenomenon of the M$^1$ metal is induced according to Equation 1.

According to an embodiment of the present invention, the method of preparing a positive electrode active material may include a step (S40) of washing and drying the sintered material sintered in step (S30). The washing of step (S40) is to remove a lithium by-product remaining on the surface of the lithium composite transition metal oxide, wherein it may be performed by washing or may be performed through a method of washing a positive electrode active material which is known in the art. As a specific example, step (S40) may be performed by a method in which, after the lithium composite transition metal oxide and a washing solution are mixed, stirred, and then filtered to remove the washing solution, drying is performed. In this case, the drying, for example, may be performed at a temperature of 50°C to 150°C.

According to an embodiment of the present invention, the method of preparing a positive electrode active material may include a step (S50) of performing a heat treatment, after mixing a boron raw material with the sintered material washed and dried in step (S40). In this case, the boron raw material may be mixed in an amount of 500 ppm to 1,500 ppm. Also, the heat treatment may be performed at 250°C to 350°C.

**Positive Electrode**

The present invention provides a positive electrode including the positive electrode active material.

According to an embodiment of the present invention, the positive electrode may include a positive electrode collector and a positive electrode active material layer formed on the positive electrode collector, wherein the positive electrode active material layer may include the above positive electrode active material.

According to an embodiment of the present invention, the positive electrode collector may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 $\mu$m, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

According to an embodiment of the present invention, the positive electrode active material layer may optionally include a conductive agent and a binder in addition to the positive electrode active material, if necessary. In this case, the positive electrode active material may be included in an amount of 80 wt% to 99 wt%, for example, 85 wt% to 98.5 wt% based on a total weight of the positive electrode active material layer, and excellent capacity characteristics may be obtained within this range.

According to an embodiment of the present invention, the conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% based on the total weight of the positive electrode active material layer.

According to an embodiment of the present invention, the binder improves the adhesion between positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca), or various copolymers thereof, and any one thereof or a mixture of two or more thereof may be used. The binder may be included in an amount of 0.1 wt% to 15 wt% based on the total weight of the positive electrode active material layer.

According to an embodiment of the present invention, the positive electrode may be prepared according to a typical method of preparing a positive electrode except that the above-described positive electrode active material is used. Specifically, a composition for forming a positive electrode active material layer, which is prepared by dissolving or dispersing the positive electrode active material as well as optionally the binder and the conductive agent in a solvent, is coated on the positive electrode collector, and the positive electrode may then be prepared by drying and rolling the coated positive electrode collector, or the positive electrode may be prepared by casting the composition for forming a positive electrode active material layer on a separate support and then laminating a film separated from the support on the positive electrode collector.

According to an embodiment of the present invention, the solvent may be a solvent normally used in the art, and may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of a slurry and manufacturing yield, and may allow to have a viscosity that may provide excellent thickness uniformity during the subsequent coating for the preparation of the positive electrode.

**Lithium Secondary Battery**

The present invention provides a lithium secondary battery including the positive electrode.

According to an embodiment of the present invention, the lithium secondary battery may include the positive electrode; a negative electrode; a separator disposed between the positive electrode and the negative electrode, and an electrolyte. Also, the lithium secondary battery may further optionally include a battery container accommodating an electrode assembly of the positive electrode, the negative electrode, and the separator, and a sealing member sealing the battery container.

According to an embodiment of the present invention, the negative electrode may include a negative electrode collector and a negative electrode active material layer disposed on the negative electrode collector.

According to an embodiment of the present invention, the negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

According to an embodiment of the present invention, the negative electrode active material layer may optionally include a binder and a conductive agent in addition to the negative electrode active material.

According to an embodiment of the present invention, a compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes. The negative electrode active material may be included in an amount of 80 wt% to 99 wt% based on a total weight of the negative electrode active material layer.

According to an embodiment of the present invention, the binder of the negative electrode active material layer is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

According to an embodiment of the present invention, the conductive agent of the negative electrode active material layer is a component for further improving conductivity of the negative electrode active material, wherein the conductive agent may be added in an amount of 10 wt% or less, for example, 5 wt% or less based on the total weight of the negative electrode active material layer. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

According to an embodiment of the present invention, the negative electrode may be prepared by coating a composition for forming a negative electrode active material layer, which is prepared by dissolving or dispersing optionally the binder and the conductive agent as well as the negative electrode active material in a solvent, on the negative electrode collector and drying the coated negative electrode collector, or may be prepared by casting the composition for forming a negative electrode active material layer on a separate support and then laminating a film separated from the support on the negative electrode collector.

According to an embodiment of the present invention, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

According to an embodiment of the present invention, the electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto. As a specific example, the electrolyte may include an organic solvent and a lithium salt.

According to an embodiment of the present invention, any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

According to an embodiment of the present invention, the lithium salt may be used without particular limitation as long as it is a compound capable of providing lithium ions used in the lithium secondary battery. Specifically, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

According to an embodiment of the present invention, in order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 5 wt% based on a total weight of the electrolyte.

Since the lithium secondary battery including the positive electrode active material according to the present invention stably exhibits excellent capacity characteristics, output characteristics, and life characteristics, the lithium secondary battery is suitable for portable devices, such as mobile phones, notebook computers, and digital cameras, and electric cars such as hybrid electric vehicles (HEVs) and electric vehicles (EVs).

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Thus, according to an embodiment of the present invention, a battery module including the lithium secondary battery as a unit cell and a battery pack including the battery module are provided.

According to an embodiment of the present invention, the battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

**Examples and Comparative Examples**

**Example 1**

4.5 L of distilled water, 450 g of ammonia water ($NH_4OH$), and 6.5 g of sodium hydroxide (NaOH) were added to a reactor equipped with a stirrer, and, while stirring at 700 rpm, an internal temperature of the reactor was maintained at 54°C.

$NiSO_4 \cdot 6H_2O$, $CoSO_4 \cdot 7H_2O$, $MnSO_4 \cdot H_2O$, and $Ce(NO_3)_3$ were mixed in deionized water in amounts such that a molar ratio of nickel:cobalt:manganese:cerium was 87.9:5.0:7.0:0.1 to prepare a transition metal-containing aqueous solution with a concentration of 3.14 M.

The transition metal-containing aqueous solution was added at a flow rate of 8 ml/min and ammonia water ($NH_4OH$) was added at a flow rate of 4 ml/min into the reactor, and a sodium hydroxide (NaOH) aqueous solution with a concentration of 40 wt% was added so that a pH of the solution in the reactor was 11.4.

Subsequently, particle growth was performed for 12 hours in the reactor, and a positive electrode active material precursor with an average composition of $Ni_{0.879}Co_{0.050}Mn_{0.070}Ce_{0.001}(OH)_2$ having an average particle diameter of 11.5 um was prepared while a stirring speed was decreased to 400 rpm for 8 hours.

Lithium raw material $LiOH \cdot H_2O$ and the above-prepared positive electrode active material precursor were mixed so that a molar ratio of Li:metal(Ni+Co+Mn+Ce) in the precursor was 1.05:1. The mixture was sintered by being held at 780°C for 5 hours in an oxygen ($O_2$) atmosphere to prepare lithium composite transition metal oxide $Li_{1.05}Ni_{0.879}Co_{0.050}Mn_{0.070}Ce_{0.001}O_2$ .

After 100 g of the above-prepared lithium composite transition metal oxide and 100 g of water were mixed, stirred for 5 minutes, and washed, the washed product was subjected to a separation filter treatment with a filter press so that a water content in the washed product was 5 wt% to 10 wt%, and was then dried at 130°C for 4 hours. Subsequently, $H_3BO_3$ was mixed with the washed and dried lithium composite transition metal oxide in an amount of 1,000 ppm, and the mixture was heat-treated at 300°C for 4 hours to prepare a positive electrode active material coated with a B solid solution.

**Example 2**

A positive electrode active material coated with a B solid solution was prepared in the same manner as in Example 1 except that, when preparing the transition metal-containing aqueous solution in Example 1, $NiSO_4 \cdot 6H_2O$,

$CoSO_4 \cdot 7H_2O$, $MnSO_4 \cdot H_2O$, and $Ce(NO_3)_3$ were mixed in amounts such that the molar ratio of nickel:cobalt:manganese:cerium was 87.8:5.0:7.0:0.2 instead of 87.9:5.0:7.0:0.1. In this case, the prepared positive electrode active material precursor had an average particle diameter of 11.4 um and had an average composition of $Ni_{0.878}Co_{0.050}Mn_{0.070}Ce_{0.002}$ $(OH)_2$, and the prepared lithium composite transition metal oxide was $Li_{1.05}Ni_{0.878}Co_{0.050}Mn_{0.070}Ce_{0.002}O_2$.

## Comparative Example 1

A positive electrode active material coated with a B solid solution was prepared in the same manner as in Example 1 except that, when preparing the transition metal-containing aqueous solution in Example 1, $NiSO_4 \cdot 6H_2O$, $CoSO_4 \cdot 7H_2O$, and $MnSO_4 \cdot H_2O$, instead of $NiSO_4 \cdot 6H_2O$, $CoSO_4 \cdot 7H_2O$, $MnSO_4 \cdot H_2O$, and $Ce(NO_3)_3$, were mixed in amounts such that a molar ratio of nickel:cobalt:manganese was 88:5:7. In this case, the prepared positive electrode active material precursor had an average composition of $Ni_{0.88}Co_{0.05}Mn_{0.07}(OH)_2$, and the prepared lithium composite transition metal oxide was $Li_{1.05}Ni_{0.88}Co_{0.05}Mn_{0.07}O_2$.

## Comparative Example 2

A positive electrode active material coated with a B solid solution was prepared in the same manner as in Example 1 except that, in Example 1, lithium raw material $LiOH \cdot H_2O$ and the above-prepared positive electrode active material precursor were mixed so that the molar ratio of Li:metal(Ni+Co+Mn+Ce) in the precursor was 1.05:1, and the mixture was sintered by being held at 900°C for 5 hours, instead of being held at 780°C for 5 hours, in an oxygen ($O_2$) atmosphere. In this case, the prepared lithium composite transition metal oxide was $Li_{1.05}Ni_{0.879}Co_{0.050}Mn_{0.070}Ce_{0.001}O_2$.

## Comparative Example 3

4.5 L of distilled water, 450 g of ammonia water ($NH_4OH$), and 6.5 g of sodium hydroxide (NaOH) were added to a reactor equipped with a stirrer, and, while stirring at 700 rpm, an internal temperature of the reactor was maintained at 54°C.

$NiSO_4 \cdot 6H_2O$, $CoSO_4 \cdot 7H_2O$, and $MnSO_4 \cdot H_2O$ were mixed in deionized water in amounts such that a molar ratio of nickel:cobalt:manganese was 88:5:7 to prepare a transition metal-containing aqueous solution with a concentration of 3.14 M.

The transition metal-containing aqueous solution was added at a flow rate of 8 ml/min and ammonia water ($NH_4OH$) was added at a flow rate of 4 ml/min into the reactor, and a sodium hydroxide (NaOH) aqueous solution with a concentration of 40 wt% was added so that a pH of the solution in the reactor was 11.4.

Subsequently, particle growth was performed for 12 hours in the reactor, and a positive electrode active material precursor with an average composition of $Ni_{0.88}Co_{0.05}Mn_{0.07}(OH)_2$ having an average particle diameter of 11.5 um was prepared while a stirring speed was decreased to 400 rpm for 8 hours.

Lithium raw material $LiOH \cdot H_2O$ and the above-prepared positive electrode active material precursor were mixed so that a molar ratio of Li:metal(Ni+Co+Mn) in the precursor was 1.05:1. The mixture was sintered by being held at 780°C for 5 hours in an oxygen ($O_2$) atmosphere to prepare lithium composite transition metal oxide $Li_{1.05}Ni_{0.88}Co_{0.05}Mn_{0.07}O_2$.

After 100 g of the above-prepared lithium composite transition metal oxide and 100 g of water were mixed, stirred for 5 minutes, and washed, the washed product was subjected to a separation filter treatment with a filter press so that a water content in the washed product was 5 wt% to 10 wt%, and was then dried at 130°C for 4 hours. Subsequently, with respect to the washed and dried lithium composite transition metal oxide, $CeO_2$ was mixed in an amount such that a molar ratio of the lithium composite transition metal oxide:$CeO_2$ was 1:0.1, and $H_3BO_3$ was mixed in an amount of 1,000 ppm, and the mixture was heat-treated at 300°C for 4 hours to prepare a positive electrode active material coated with a Ce and B solid solution.

## Experimental Examples

## Experimental Example 1: Average Particle Diameter of the Positive Electrode Active Material Precursor, Crystal Size, and Average Particle Diameter ($D_{50}$) of Secondary Particle

Average particle diameters of the positive electrode active material precursors prepared in Examples 1 and 2 and Comparative Examples 1 to 3 were measured as follows and the results thereof are presented in Table 1 below.

Also, the positive electrode active materials prepared in Examples 1 and 2 and Comparative Examples 1 to 3 were subjected to X-ray diffraction (XRD) measurement in the following manner, and crystal sizes were calculated and presented in Table 1 below.

Furthermore, average particle diameters ($D_{50}$) of secondary particles were measured as follows and presented in Table 1 below.

* Average particle diameter ($\mu$m) of the positive electrode active material precursor: After 0.2 g of positive electrode active material precursor particles was collected from positive electrode active material precursor powders prepared in Examples 1 and 2 and Comparative Examples 1 to 3 and dispersed in water in which a small amount of sodium hexametaphosphate (($NaPO_3$)$_6$) was added, an average particle diameter ($D_{50}$) according to cumulative distribution of volume of the positive electrode active material precursor particles was measured using a laser diffraction particle size measurement instrument (S3500 by Microtrac).

* Crystal size (nm): 2 g of the positive electrode active material particles was collected from the positive electrode active material powders prepared in Examples 1 and 2 and Comparative Examples 1 to 3, and a crystal size was measured by an X-ray diffraction analysis method using a D4 ENDEAVOR by Bruker AXS GmbH with a copper (Cu) target at an accelerating voltage of 40 kV, an accelerating current of 40 mA, and a rate of 3° per minute within a range of 10° to 90°, and the crystal size of primary particle was calculated using a TOPAS program of Bruker AXS GmbH.

* Average particle diameter ($\mu$m) of secondary particles: After 0.2 g of the positive electrode active material particles was collected from the positive electrode active material powders prepared in Examples 1 and 2 and Comparative Examples 1 to 3 and dispersed in water in which a small amount of sodium hexametaphosphate (($NaPO_3$)$_6$) was added, an average particle diameter ($D_{50}$) according to cumulative distribution of volume of the positive electrode active material secondary particles was measured using a laser diffraction particle size measurement instrument (S3500 by Microtrac).

[Table 1]

| Category | Average particle diameter of the positive electrode active material precursor ($\mu$m) | Crystal size (nm) | Average particle diameter of secondary particles ($\mu$m) |
|---|---|---|---|
| Example 1 | 11.5 | 125.8 | 11.2 |
| Example 2 | 11.4 | 123.2 | 11.2 |
| Comparative Example 1 | 10.7 | 106.6 | 10.5 |
| Comparative Example 2 | 11.5 | 148.6 | 11.2 |
| Comparative Example 3 | 11.5 | 120.1 | 11.2 |

As illustrated in Table 1, with respect to Examples 1 and 2 and Comparative Examples 2 and 3, it may be confirmed that secondary particles having the same average particle diameter of the positive electrode active materials were prepared.

In contrast, with respect to Comparative Example 1 not including cerium, it may be confirmed that average particle diameters of the positive electrode active material precursor and the secondary particles were smaller than those of the examples, and, with respect to Comparative Example 2, which was sintered at a higher temperature than the examples, it may be confirmed that its crystal size was large.

**Experimental Example 2: Confirmation of Molar Ratio of the Positive Electrode Active Material Precursor through ICP Analysis**

Inductively coupled plasma (ICP) analysis was performed on the positive electrode active material precursors prepared in Examples 1 and 2 and Comparative Examples 1 to 3 in the following manner to confirm molar ratios of the positive electrode active material precursors, and the results thereof are presented in Table 2 below.

* ICP analysis: After 0.1 g of the positive electrode active material precursor particles prepared in Examples 1 and 2 and Comparative Examples 1 to 3 was collected and accurately weighed in a vial, 1 ml of hydrochloric acid was added. Subsequently, each sample was dissolved by being heated on a hot plate. In this case, a small amount of hydrogen peroxide was added to promote a reaction of the sample. After the sample was completely and clearly dissolved, it was diluted to 10 ml with tertiary ultrapure water to prepare an analysis sample for ICP analysis.

Thereafter, ICP analysis was performed on the prepared analysis sample under the following conditions using inductively coupled plasma-optical emission spectroscopy (ICP-OES) Quant.

- RF Power: 1,300 W
- Torch Height: 15.0 mm
- Plasma Gas Flow: 15.00 L/min
- Sample Gas Flow: 0.80 L/min
- Aux. Gas Flow: 0.20 L/min
- Pump Speed: 1.5 mL/min
- Internal Standard: Y or Sc

[Table 2]

| Category | Ni (mol%) | Co (mol%) | Mn (mol%) | Ce (mol%) |
|---|---|---|---|---|
| Example 1 | 88.0 | 5.1 | 6.8 | 0.1 |
| Example 2 | 87.9 | 5.1 | 6.8 | 0.2 |
| Comparative Example 1 | 87.5 | 5.3 | 7.2 | 0.0 |
| Comparative Example 2 | 88.0 | 5.1 | 6.8 | 0.1 |
| Comparative Example 3 | 87.5 | 5.3 | 7.2 | 0.0 |

As illustrated in Table 2, with respect to Examples 1 and 2 and Comparative Examples 2 in which Ce was introduced during the preparation of the positive electrode active material precursors, it may be confirmed that Ce was included in the intended content in the positive electrode active material precursors.

**Experimental Example 3: SEM Observation and EDS Analysis of the Positive Electrode Active Materials of Example 1 and Comparative Examples 1 to 3**

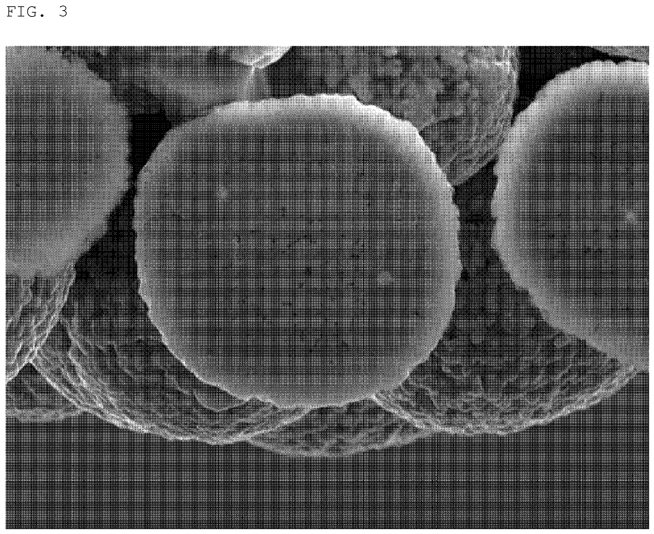

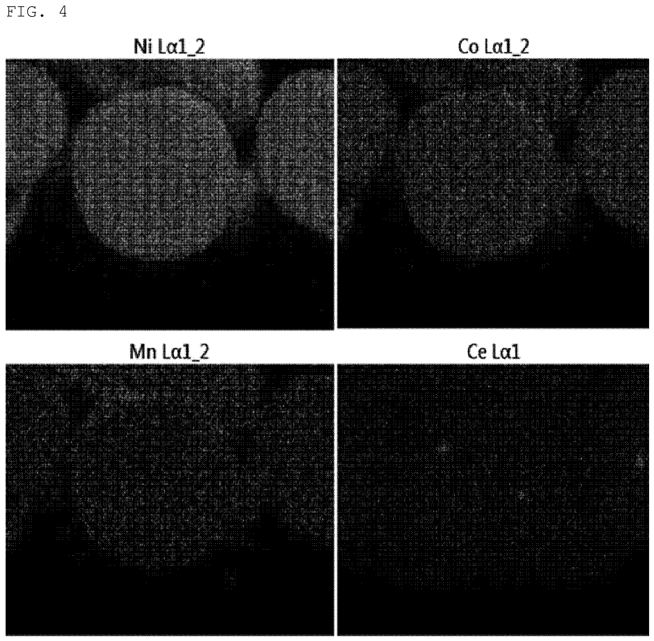

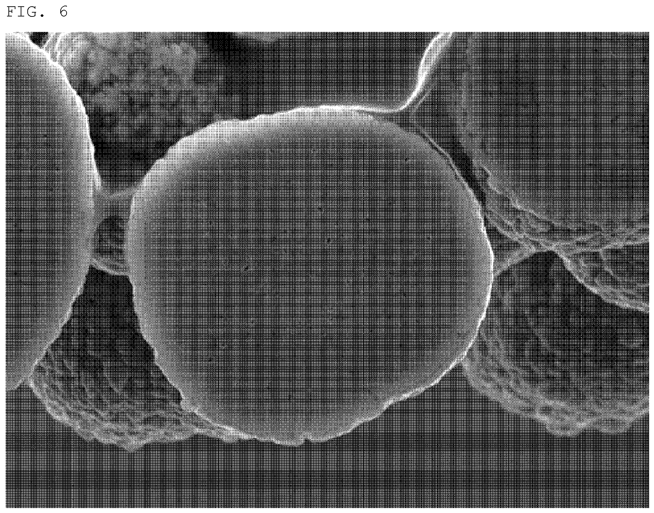

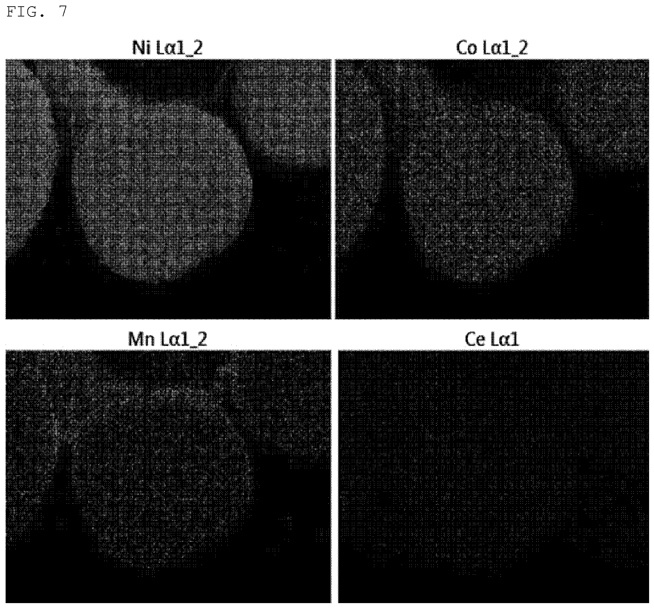

Cross sections of the positive electrode active materials prepared in Example 1 and Comparative Example 1 were photographed using a scanning electron microscope (SEM) equipped with energy dispersive X-ray spectroscopy (EDS), and a cross-sectional SEM image of the positive electrode active material of Example 1, EDS mapping results of the cross-sectional SEM image of the positive electrode active material of Example 1, EDS line scan results of the cross-sectional SEM image of the positive electrode active material of Example 1, a cross-sectional SEM image of the positive electrode active material of Comparative Example 1, EDS mapping results of the cross-sectional SEM image of the positive electrode active material of Comparative Example 1, and EDS line scan results of the positive electrode active material of Comparative Example 1 are illustrated in FIG. 3, FIG. 4, FIG. 5, FIG. 6, FIG. 7, and FIG. 8, respectively.

Also, the EDS line scan results of the cross section of the positive electrode active materials of Example 1 and Comparative Example 1 are presented in Table 3 below.

[Table 3]

| Category | | Example 1 | Comparative Example 1 |
|---|---|---|---|
| Intensity average | Ni | 560.3 | 576.6 |
| | Co | 140.9 | 142.1 |
| | Mn | 33.9 | 33.7 |
| | Ce | 42.6 | 23.2 |

(continued)

| Category | | Example 1 | Comparative Example 1 |
|---|---|---|---|
| Intensity percentage (%) | Ni | 72.08 | 74.30 |
| | Co | 18.1 | 18.3 |
| | Mn | 4.4 | 4.3 |
| | Ce | 5.5 | 2.9(noise) |

As illustrated in FIGS. 3 to 8 and Table 3, with respect to the positive electrode active material of Example 1 of the present invention, it may be confirmed that a coating portion was locally formed on surfaces of primary particles and at inter-particle boundaries of the primary particles even though no separate coating was performed using cerium. From this, it may be understood that the coating portion was formed by concentration of cerium on the surfaces of the primary particles or at the inter-particle boundaries of the primary particles due to a segregation phenomenon during the preparation of the positive electrode active material. In contrast, with respect to Comparative Example 1, since only noise of Ce was observed, it may be confirmed that the coating portion did not exist.

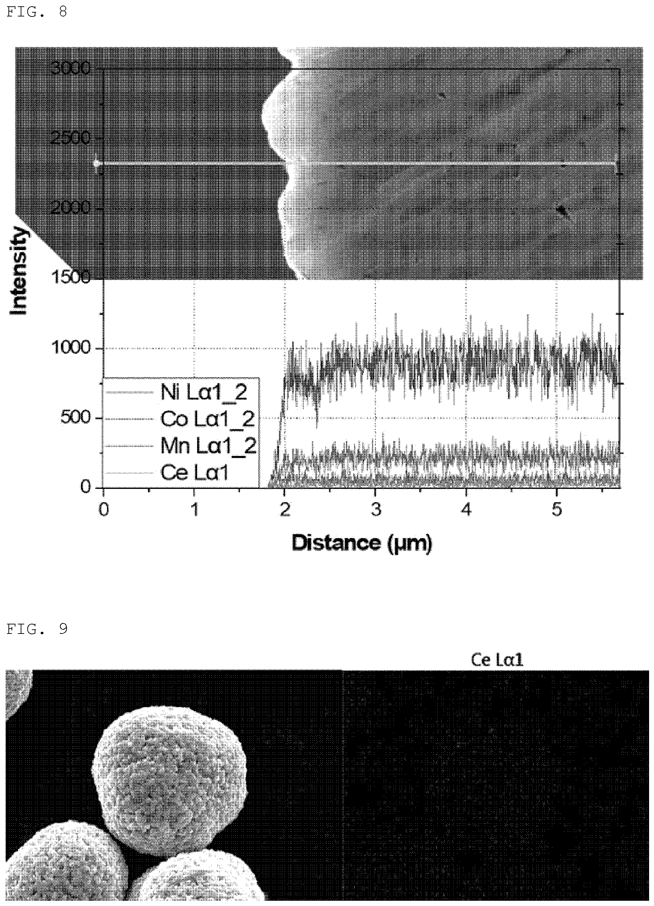

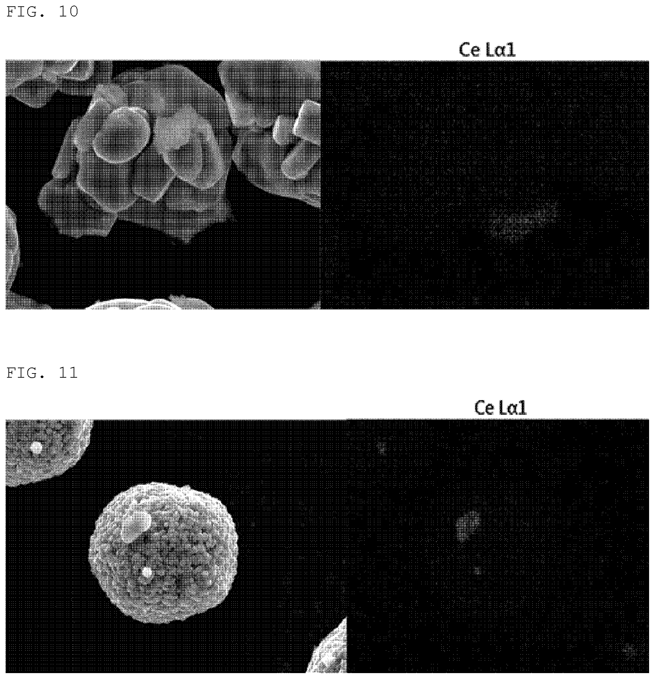

Also, the positive electrode active materials prepared in Example 1 and Comparative Example 2 were photographed using a scanning electron microscope (SEM) equipped with energy dispersive X-ray spectroscopy (EDS), and an SEM image of the positive electrode active material of Example 1 with an EDS mapping result for Ce and an SEM image of the positive electrode active material of Comparative Example 2 with an EDS mapping result for Ce are illustrated in FIG. 9 and FIG. 10, respectively.

As illustrated in FIGS. 9 and 10, with respect to the positive electrode active material of Example 1 of the present invention, it may be confirmed that a coating portion was locally formed on the surfaces of the primary particles and at the inter-particle boundaries of the primary particles, but, with respect to the positive electrode active material of Comparative Example 2 in which the sintering temperature was high even if the positive electrode active material was prepared by using the same positive electrode active material precursor formed by co-precipitation of Ce, it may be confirmed that its crystal size was increased due to the high sintering temperature and a coating portion was not locally formed on the surfaces of the primary particles and at the inter-particle boundaries of the primary particles, but was formed by protruding from a surface portion of the secondary particle due to an over-segregation phenomenon. This causes a degradation of capacity characteristics, as may be confirmed in Experimental Example 4 to be described later.

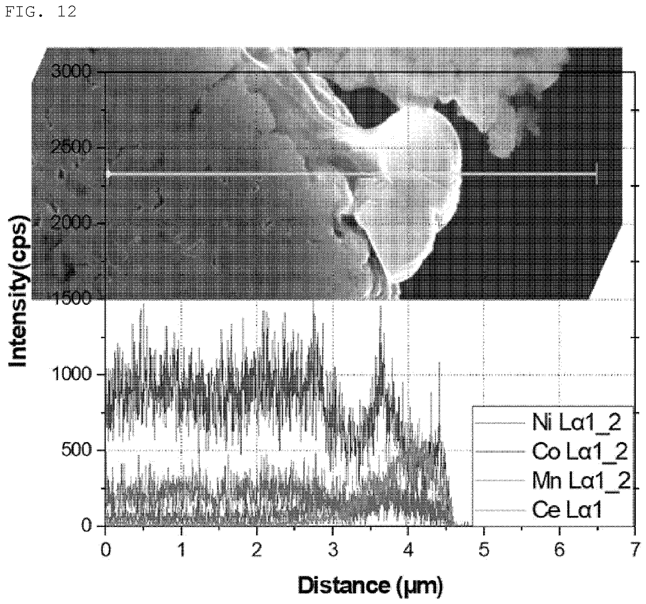

Furthermore, the positive electrode active material prepared in Comparative Example 3 was photographed using a scanning electron microscope (SEM) equipped with energy dispersive X-ray spectroscopy (EDS), and an SEM image of the positive electrode active material of Comparative Example 3 with an EDS mapping result for Ce and EDS line scan results of a cross-sectional SEM image of the positive electrode active material of Comparative Example 3 are illustrated in FIG. 11 and FIG. 12, respectively.

As illustrated in FIGS. 9 and 11, with respect to the positive electrode active material of Example 1 of the present invention, it may be confirmed that the coating portion was locally formed on the surfaces of the primary particles and at the inter-particle boundaries of the primary particles, but, with respect to the positive electrode active material of Comparative Example 3 which was simply coated with Ce, it may be confirmed that a crystal structure was formed on a surface of the positive electrode active material.

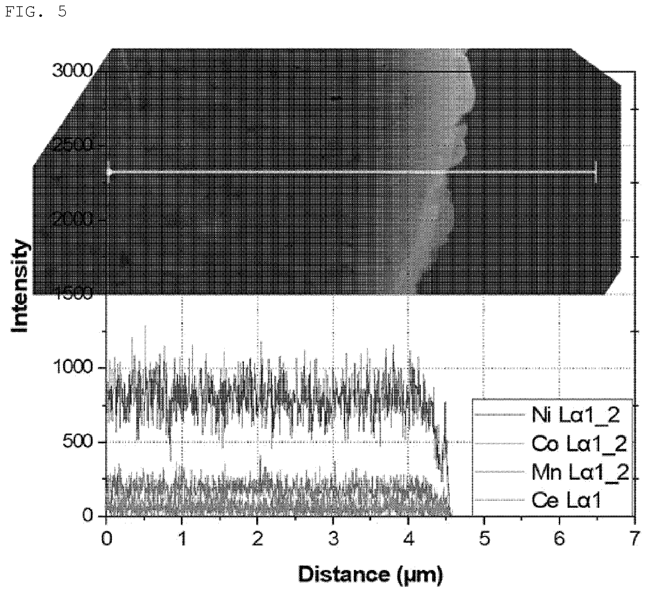

Particularly, as illustrated in FIGS. 5 and 12, it may be confirmed that Ce was uniformly observed in the positive electrode active material of Example 1 of the present invention, but, in the positive electrode active material of Comparative Example 3, it may be confirmed that Ce was concentrated on a surface portion of the secondary particle.

From these results, it may be confirmed that, with respect to the positive electrode active material of Comparative Example 3, a coating portion was not formed on the surfaces of the primary particles and at the inter-particle boundaries of the primary particles in the positive electrode active material, but was formed on the surface portion of the secondary particle. This becomes a cause that does not affect the improvement of capacity characteristics and life characteristics, as may be confirmed in Experimental Example 4 to be described later.

**Experimental Example 4: Capacity Characteristics and Life Characteristics Evaluation**

98 wt% of each of the positive electrode active materials prepared in Examples 1 and 2 and Comparative Examples 1 to 3, 2.0 wt% of carbon black as a conductive agent, and 2.0 wt% of polyvinylidene fluoride (PVDF), as a binder, were mixed in an N-methylpyrrolidone (NMP) solvent to prepare a positive electrode slurry. One surface of an aluminum current collector was coated with the above-prepared positive electrode slurry, dried at 130°C, and then roll-pressed to prepare a positive electrode.

A lithium metal electrode was used as a negative electrode, and an electrode assembly was prepared by disposing a porous polyethylene separator between the positive electrode and the negative electrode. The electrode assembly was disposed in a battery case and an electrolyte solution was injected to prepare each coin-type half-cell. In this case, the electrolyte solution was prepared by dissolving 1 M LiPF$_6$ in an organic solvent in which ethylene carbonate(EC):ethyl methyl carbonate(EMC):diethyl carbonate(DEC) were mixed in a volume ratio of 3:4:3.

The above-prepared coin-type half-cells including the positive electrode active materials of Examples 1 and 2 and Comparative Examples 1 to 3 were charged at 0.1 C to 4.3 V in a constant current/constant voltage (CC/CV) mode at 25°C, and discharged at a constant current of 0.1 C to 3.0 V to measure charge capacity, discharge capacity, and direct current internal resistance (DCIR) and the results thereof are presented in Table 4 below.

Also, charging of the coin-type half-cells at 0.33 C to 4.3 V in a CC/CV mode at 45°C and discharging of the coin-type half-cells at a constant current of 0.33 C to 3.0 V were set as one cycle, and, after 30 cycles of charging and discharging were performed, capacity retentions and resistance increase rates were measured and presented in Table 5 below.

[Table 4]

| Category | 0.1 C/0.1 C | | | |
|---|---|---|---|---|
| | Charge capacity (mAh/g) | Discharge capacity (mAh/g) | Charge and discharge efficiency (%) | Direct current internal resistance ($\Omega$) |
| Example 1 | 230.8 | 211.9 | 91.8 | 19.1 |
| Example 2 | 230.4 | 211.5 | 91.8 | 18.6 |
| Comparative Example 1 | 228.2 | 208.1 | 91.2 | 18.8 |
| Comparative Example 2 | 221.4 | 204.8 | 92.5 | 15.3 |
| Comparative Example 3 | 228.4 | 208.4 | 91.2 | 19.2 |

[Table 5]

| Category | Capacity retention after 30 cycles (%) | Resistance increase rate after 30 cycles (%) |
|---|---|---|
| Example 1 | 97.6 | 126.9 |
| Example 2 | 97.5 | 128.2 |
| Comparative Example 1 | 96.6 | 150.3 |
| Comparative Example 2 | 97.1 | 119.8 |
| Comparative Example 3 | 97.0 | 130.9 |

As illustrated in Tables 4 and 5, since the batteries including the positive electrode active materials of Examples 1 and 2 according to the present invention had both excellent charge capacity and discharge capacity and high capacity retentions and low resistance increase rates after 30 cycles, it may be confirmed that both capacity characteristics and life characteristics were excellent.

In contrast, since the battery including the positive electrode active material of Comparative Example 1, which did not include cerium at all, had somewhat low charge capacity and discharge capacity and, particularly, capacity retention was reduced after 30 cycles and resistance increase rate was rapidly increased at the same time, it may be confirmed that life characteristics were poor.

Also, with respect to the battery including the positive electrode active material of Comparative Example 2 in which the coating portion, in which cerium was locally present on the surfaces of the primary particles or at the interparticle boundaries of the primary particles, was not formed because sintering was performed at a high temperature even if cerium was included, but the coating portion protruding from the surface portion of the secondary particle due to the over-segregation was formed, since charge capacity and discharge capacity were rapidly decreased, it may be confirmed that capacity characteristics were poor.

Furthermore, with respect to the battery including the positive electrode active material of Comparative Example 3 in which the coating portion was formed on the surface of the secondary particle by introducing cerium by simple coating rather than the segregation phenomenon, it may be confirmed that both improvements of capacity characteristics and life characteristics were only insignificant in comparison to Comparative Example 1.

From these results, it may be confirmed that the positive electrode active material of the present invention is a positive electrode active material including a high nickel (high Ni) lithium composite transition metal oxide, wherein, since the coating portion was introduced on the surfaces of the primary particles or at the inter-particle boundaries of the primary particles by the segregation phenomenon, the life characteristics of the lithium secondary battery may be improved and the resistance increase rate may be minimized, and, also, according to the method of preparing a positive electrode active material of the present invention, it may be confirmed that the coating portion may be effectively introduced on the surfaces of the primary particles or at the inter-particle boundaries of the primary particles by inducing the segregation phenomenon without performing a separate coating step.

**Claims**

1. A positive electrode active material comprising a lithium composite transition metal oxide and

   being a secondary particle in which primary particles are aggregated,
   wherein the primary particle comprises a coating portion containing an $M^1$ metal of Formula 1,
   wherein the coating portion is locally present on surfaces of the primary particles or at inter-particle boundaries of the primary particles, and
   the lithium composite transition metal oxide has an average composition represented by Formula 1 by including the coating portion:

   [Formula 1]     $Li_xNi_aCo_bMn_cM^1_dM^2_eO_2$

   wherein, in Formula 1,
   $M^1$ is at least one selected from the group consisting of lanthanides,
   $M^2$ is at least one selected from the group consisting of Al, Zr, B, W, Mo, Cr, Nb, Mg, Hf, Ta, La, Ti, Sr, Ba, F, P, S, and Y, and
   $0.9 \leq x \leq 1.1$, $0.8 \leq a < 1.0$, $0 < b < 0.2$, $0 < c < 0.2$, $0 < d \leq 0.1$, $0 \leq e \leq 0.1$, and $a+b+c+d+e=1$.

2. The positive electrode active material of claim 1, wherein the $M^1$ is Ce.

3. The positive electrode active material of claim 1, wherein the coating portion is not a coating portion which is formed on a surface of the secondary particle.

4. The positive electrode active material of claim 1, wherein the primary particle has a crystal size of 90 nm to 140 nm.

5. The positive electrode active material of claim 1, wherein the secondary particle has an average particle diameter ($D_{50}$) of 8 um to 20 $\mu$m.

6. The positive electrode active material of claim 1, further comprising a coating layer including boron which is formed on a part or all of the surface of the primary particle; and a part or all of a surface of the secondary particle.

7. A method of preparing a positive electrode active material, the method comprising steps of:

   mixing a nickel raw material, a cobalt raw material, a manganese raw material, and an $M^1$ metal raw material of Formula 3 in an aqueous solution phase, and performing a co-precipitation reaction to prepare a positive electrode active material precursor having an average composition represented by Formula 3 (S10);
   mixing the positive electrode active material precursor and a lithium raw material (S20); and
   sintering the mixture mixed in the step (S20) in an oxygen atmosphere (S30):

   [Formula 3]     $[Ni_aCo_bMn_cM^1_d](OH)_2$

   wherein, in Formula 3,
   $M^1$ is at least one selected from the group consisting of lanthanides, and
   $0.8 \leq a < 1.0$, $0 < b < 0.2$, $0 < c < 0.2$, $0 < d \leq 0.1$, and $a+b+c+d=1$.

8. The method of claim 7, wherein the $M^1$ metal raw material is a nitrate of $M^1$ metal.

9. The method of claim 7, wherein, during the co-precipitation reaction of the step (S10), a pH is maintained at 11.3 to 11.5.

10. The method of claim 7, wherein the co-precipitation reaction of the step (S10) is performed for 10 hours to 30 hours.

11. The method of claim 7, wherein the positive electrode active material precursor prepared in the step (S10) has an average particle diameter of 1 um to 20 μm.

12. The method of claim 7, wherein the step (S20) is performed by further including one or more doping raw materials selected from the group consisting of Al, Zr, B, W, Mo, Cr, Nb, Mg, Hf, Ta, La, Ti, Sr, Ba, F, P, S, and Y.

13. The method of claim 7, wherein the sintering of the step (S30) is performed at a temperature of 700°C to 800°C for 4 hours to 6 hours.

14. The method of claim 7, further comprising a step (S40) of washing and drying the sintered material sintered in the step (S30).

15. The method of claim 14, further comprising a step (S50) of performing a heat treatment, after mixing a boron raw material with the sintered material washed and dried in the step (S40).

16. A positive electrode comprising the positive electrode active material of any one of claims 1 to 6.

17. A lithium secondary battery comprising the positive electrode of claim 16; a negative electrode; a separator disposed between the positive electrode and the negative electrode, and an electrolyte.

FIGURES

FIG. 1

SINTERING

● Ni, Co, Mn

FIG. 2

SINTERING

● Ni, Co, Mn   ● Co

FIG. 3

FIG. 4

Ni Lα1_2

Co Lα1_2

Mn Lα1_2

Ce Lα1

FIG. 5

FIG. 6

FIG. 7

Ni Lα1_2       Co Lα1_2

Mn Lα1_2       Ce Lα1

FIG. 8

FIG. 9

FIG. 10

FIG. 11

FIG. 12

## INTERNATIONAL SEARCH REPORT

| International application No. |
|---|
| **PCT/KR2022/012292** |

**A.    CLASSIFICATION OF SUBJECT MATTER**

**H01M 4/36**(2006.01)i; **H01M 4/525**(2010.01)i; **H01M 4/505**(2010.01)i; **H01M 4/62**(2006.01)i; **C01G 53/00**(2006.01)i; **H01M 10/052**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/36(2006.01); H01M 10/052(2010.01); H01M 10/0525(2010.01); H01M 4/02(2006.01); H01M 4/525(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극활물질(positive electrode active material), 란탄넘족(lanthanide), 코팅(coating)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2021-0097057 A (LG CHEM, LTD.) 06 August 2021 (2021-08-06)<br>      See claim 13; and paragraphs [0095], [0146] and [0174]-[0179]. | 1-17 |
| Y | KR 10-2000-0038919 A (SAMSUNG SDI CO., LTD.) 05 July 2000 (2000-07-05)<br>      See claim 1; pages 2 and 3; and example 9. | 1-17 |
| A | KR 10-2021-0017457 A (SAMSUNG SDI CO., LTD.) 17 February 2021 (2021-02-17)<br>      See claims 1-14. | 1-17 |
| A | JP 2000-012022 A (SEIMI CHEM. CO., LTD.) 14 January 2000 (2000-01-14)<br>      See entire document. | 1-17 |
| A | KR 10-2019-0077160 A (POSCO et al.) 03 July 2019 (2019-07-03)<br>      See entire document. | 1-17 |

| ☐ Further documents are listed in the continuation of Box C. | ☑ See patent family annex. |
|---|---|

| | |
|---|---|
| \*    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **18 November 2022** | **18 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2022/012292**

| Patent document cited in search report | | | Publication date (day/month/year) | Patent family member(s) | | | Publication date (day/month/year) |
|---|---|---|---|---|---|---|---|
| KR | 10-2021-0097057 | A | 06 August 2021 | CN | 115004417 | A | 02 September 2022 |
| | | | | EP | 4080614 | A1 | 26 October 2022 |
| | | | | WO | 2021-154021 | A1 | 05 August 2021 |
| KR | 10-2000-0038919 | A | 05 July 2000 | CN | 1144305 | C | 31 March 2004 |
| | | | | CN | 1257318 | A | 21 June 2000 |
| | | | | JP | 2000-182618 | A | 30 June 2000 |
| | | | | KR | 10-0280998 | B1 | 02 March 2001 |
| | | | | US | 6291103 | B1 | 18 September 2001 |
| KR | 10-2021-0017457 | A | 17 February 2021 | CN | 112349891 | A | 09 February 2021 |
| | | | | KR | 10-2270153 | B1 | 28 June 2021 |
| | | | | US | 2021-0043931 | A1 | 11 February 2021 |
| JP | 2000-012022 | A | 14 January 2000 | JP | 4240242 | B2 | 18 March 2009 |
| KR | 10-2019-0077160 | A | 03 July 2019 | CN | 111771302 | A | 13 October 2020 |
| | | | | EP | 3731313 | A1 | 28 October 2020 |
| | | | | EP | 3731313 | A4 | 10 March 2021 |
| | | | | JP | 2021-508912 | A | 11 March 2021 |
| | | | | JP | 7012856 | B2 | 28 January 2022 |
| | | | | KR | 10-2013310 | B1 | 23 August 2019 |
| | | | | US | 2021-0376317 | A1 | 02 December 2021 |
| | | | | WO | 2019-124943 | A1 | 27 June 2019 |

Form PCT/ISA/210 (patent family annex) (July 2022)

**EP 4 343 887 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210108997
- KR 1020200036424 A